# EUROPÄISCHE PATENTSCHRIFT

(11) **EP 3 129 150 B1**
(45) Veröffentlichungstag und Bekanntmachung des Hinweises auf die Patenterteilung: **03.01.2024**
(21) Anmeldenummer: 15731493.1
(22) Anmeldetag: 04.04.2015
(51) Int. Cl.: B02C 17/16, B02C 17/18

(54) **RÜHRWERKSKUGELMÜHLE MIT EINER WELLENDURCHFÜHRUNG**
STRIRRING BALL MILL WITH A SHAFT FEEDTHROUGH
BROYEUR À AGITATEUR AVEC UNE TRAVERSÉE D'ARBRE

(30) Priorität: 11.04.2014 DE 102014105149
(43) Veröffentlichungstag der Anmeldung: 15.02.2017
(73) Patentinhaber: NETZSCH-Feinmahltechnik GmbH, 95100 Selb (DE)
(72) Erfinder: ENDERLE, Udo, 95659 Arzberg (DE); GOLLER, Thomas, 95126 Schwarzenbach / Saale (DE); GRAEF, Benjamin, 95239 Zell im Fichtelgebirge (DE)
(86) Internationale Anmeldenummer: PCT/DE2015/000172
(87) Internationale Veröffentlichungsnummer: WO 2015/154742

(56) Entgegenhaltungen:
- DE-A1- 2 026 733
- DE-A1- 2 044 895
- GB-A- 1 246 359

## Beschreibung

Die vorliegende Erfindung betrifft eine Rührwerkskugelmühle mit einer Wellendurchführung einer Antriebswelle eines Rührwerks der Rührwerkskugelmühle durch eine Stirnwand der Rührwerkskugelmühle.

### Stand der Technik

Die vorliegende Erfindung betrifft eine abdichtende Wellendurchführung einer Welle in einer Stirnseite einer Rührwerkskugelmühle. Derartige Rührwerkskugelmühlen und dienen zur Grob-, Fein- und Feinstzerkleinerung oder Homogenisierung von Mahlgut.

Sie bestehen aus einem in Rotation versetzten Mahlraum, in dem Mahlgut durch Mahlkörper zerkleinert wird. In der Regel ist der Mahlraum durch einen vertikal oder horizontal angeordneten annähernd kreiszylindrischen Mahlbehälter aufgebaut, der zu 70 - 90 % mit Mahlkörpern gefüllt ist. Befüllt werden die Mühlen in der Regel durch eine zentrale Öffnung in einer der Stirnwände o.ä.

Der Mahlbehälter ist bei Rührwerkskugelmühlen in der Regel stationär gelagert. Ein Rührwerk mit geeigneten Rührelementen sorgt für die intensive Bewegung der Mahlkörper zusammen mit dem Mahlgut. Die Mahlkörper bestehen beispielsweise aus Stahl oder verschleißfesten keramischen Materialien. Das Mahlgut beziehungsweise die Mahlgutsuspension wird kontinuierlich durch den Mahlraum gepumpt. Dabei werden die suspendierten Feststoffe durch Prall- und Scherkräfte zwischen den Mahlkörpern zerkleinert beziehungsweise dispergiert. Am Austrag der Mühle erfolgt die Trennung von Mahlgut und Mahlkörpern mittels einer geeigneten Trenneinrichtung. Der Austrag ist insbesondere von der Bauform abhängig und erfolgt beispielsweise durch Schlitze in der Mahlraumwand eines liegenden Mahlbehälters am Mühlenende, wobei die Mahlkörper durch eine Trenneinrichtung zurückgehalten werden.

Das Rührwerk besteht in der Regel aus einer Antriebswelle mit innerhalb des Mahlraums angeordneten Rührwerkzeugen. Die Bewegung der Antriebswelle wird durch einen außenhalb des Mahlraums angeordneten Antrieb bewirkt. Die Antriebswelle ist in einer den zylindrischen Mahlbehälter begrenzenden Stirnwand dynamisch durchgeführt, wobei die Durchführung eine so genannte dynamische Dichtung zum Abdichten der rotierenden Welle gegenüber der Stirnwand umfasst.

Die Erfindung bezieht sich insbesondere auf die Abdichtung der rotierenden Welle in großen Mühlen, d.h. in Mühlen, deren Mahlbehälter ein Innenraumvolumen von über 1000I umfasst. In der Regel sind die Wellen in bestehenden Mühlen gegenüber dem Mahlbehälter mittels Stopfbuchsdichtungen abgedichtet.

DE4402609 C1 beschreibt eine Rührwerkskugelmühle für fließfähiges Mahlgut. Hierbei sind der Antrieb, die Lagerung der Antriebswelle und die Wellenabdichtung außerhalb der eigentlichen Mühle angeordnet.

EP 0 700 723 B1 beschreibt eine Rührwerkskugelmühle. Hierbei ist konzentrisch zur Mittel- Längsachse von Mahlbehälter und Antriebswelle innerhalb des Mahlraums eine Rührwerkswelle angeordnet, die den Deckel durchsetzt. Der Mahlraum ist mittels außerhalb des Mahlraums angeordneter Dichtungen zwischen dem Deckel und der Rührwerkswelle abgedichtet.

Das Dokument GB 1246359 A beschreibt eine Rührwerkskugelmühle gemäß dem Oberbegriff des Anspruchs 1.

Aufgabe der Erfindung ist es eine Wellendurchführung für die Rührwerkswelle einer Rührwerkskugelmühle durch eine Stirnwand der Rührwerkskugelmühle derart auszuführen, dass eine zuverlässige Abdichtung im Bereich der Wellendurchführung erzielt wird. Vorzugsweise ist die Durchführung dergestalt ausgeführt, dass die zur Abdichtung verwendeten Elemente einfach ausgetauscht werden können.

Die obige Aufgabe wird durch eine Wellendurchführung gelöst, welche die Merkmale in Anspruch 1 aufweist. Weitere vorteilhafte Ausführungsformen werden durch die Unteransprüche beschrieben.

### Beschreibung

Die Erfindung betrifft eine Rührwerkskugelmühle umfassend einen zylindrischen Mahlbehälter, der in der Regel stehend oder liegend angeordnet ist. Der Mahlbehälter ist durch einander gegenüber liegende Stirnwände verschlossen. Bei einem stehenden Mahlbehälter spricht man insbesondere von Boden und Deckel. Die Rührwerkskugelmühle umfasst weiterhin eine Antriebswelle eines Rührwerks, die innerhalb einer Wellendurchführung durch eine Stirnwand der Rührwerkskugelmühle geführt ist. Die Antriebswelle des Rührwerks ist im Bereich einer der Stirnwände beziehungsweise im Bereich des Deckels von einer Wellendichtungshülse umschlossen und durchdringt die Stirnwand beziehungsweise den Deckel über eine zentrale Öffnung in der Stirnwand beziehungsweise dem Deckel. Die Antriebswelle und die Wellendichtungshülse werden im Bereich der zentralen Öffnung von einem Dichtungsmodul umschlossen.

Das Dichtungsmodul umfasst wenigstens ein Dichtelement zur Abdichtung der zentralen Öffnung der Stirnwand beziehungsweise des Deckels gegenüber der Antriebswelle. Das Dichtungsmodul umfasst eine Verbindungseinheit, der das mindestens eine Dichtelement zugeordnet ist. Das Dichtungsmodul ist über die Verbindungseinheit an der Stirnwand beziehungsweise dem Deckel verankert, wobei die Verankerung flexibel ausgebildet ist und ein flexibles Befestigungselement zwischen der Stirnwand beziehungsweise dem Deckel und der Verbindungseinheit umfasst.

Hierbei ist vorgesehen, dass das flexible Befestigungselement als Ringelement ausgebildet ist und in axialer Richtung aus mindestens zwei nebeneinander angeordneten Schichten aufgebaut ist, wobei mindestens eine Schicht kompressibel und / oder elastisch ist.

Gemäß einer bevorzugten Ausführungsform der Erfindung ist vorgesehen, dass die Verbindungseinheit zumindest bereichsweise allumfänglich um die Wellendichtungshülse geführt ist. Beispielsweise ist die Verbindungseinheit als eine Art ringförmiges Gehäuse ausgebildet, mit einem Innendurchmesser, der größer ist als der Außendurchmesser der Wellendichtungshülse und mit einem Außendurchmesser, der nahezu dem Innendurchmesser der zentralen Öffnung entspricht. Das Gehäuse ist insbesondere im Bereich der zentralen Öffnung mit geringem Spiel in die zentrale Öffnung eingesetzt und mit geringem Spiel auf die Wellendichtungshülse aufgesetzt und umgreift die Wellendichtungshülse allumfänglich.

Gemäß einer bevorzugten Ausführungsform der Erfindung umgreift das flexible Befestigungselement die Verbindungseinheit in Längsachse der Antriebswelle gesehen zumindest bereichsweise allumfänglich. Vorzugsweise weist das Befestigungselement einen Innendurchmesser auf, der in etwa dem Außendurchmesser des Gehäuses entspricht, so dass das Befestigungselement zumindest weitgehend ohne Spiel auf das Gehäuse aufgesetzt ist. Insbesondere ist das Befestigungselement der zentralen Öffnung der Stirnwand beziehungsweise der zentralen Öffnung des Deckels zugeordnet und zum einen an Randbereichen um die zentrale Öffnung herum und zum anderen an dem Gehäuse befestigt. Aufgrund der Flexibilität des Befestigungselementes und der Anordnung des Gehäuses im Bereich der zentralen Öffnung und auf der Wellendichtungshülse mit wenig Spiel, ist eine gewisse Bewegungsfreiheit des Gehäuses des Dichtungsmoduls gegeben. Dies erlaubt erhöhte Fertigungstoleranzen bei der Herstellung der Rührwerkswelle und / oder der Wellendichtungshülse und / oder der zentralen Öffnung in der Stirnwand beziehungsweise dem Deckel. Die Flexibilität erlaubt insbesondere Durchbiegungen und Auslenkungen der Rührwerkswelle, sowie Axialbewegungen der Rührwerkswelle im Bereich von beispielsweise bis zu 2 mm auszugleichen.

Gemäß einer weiteren Ausführungsform der Erfindung ist das flexible Befestigungselement in axialer Richtung aus drei aneinander gesetzten Schichten aufgebaut, wobei die mittlere Schicht kompressibel und / oder elastisch ist. Beispielsweise besteht das flexible Befestigungselement aus drei aneinandergesetzten Ringen mit weitgehend gleichem Innen- und Außendurchmesser. Das Material der beiden äußeren Ringe kann gegenüber dem Material des dazwischen angeordneten mittleren Ringes eine geringere Verformbarkeit besitzen. Vorzugsweise bestehen die beiden äußeren Ringe aus Stahl oder einem anderen geeigneten Material und der mittlere Ring aus Gummi oder einem anderen geeigneten kompressiblen und / oder elastischen Material.

Vorzugsweise ist das ringförmig ausgebildete Befestigungselement mit einer Stirnseite an der Stirnwand beziehungsweise dem Deckel befestigt und mit der gegenüberliegenden Stirnseite an der Verbindungseinheit beziehungsweise dem Gehäuse befestigt. Bei einem oben beschriebenen dreiteilig ausgebildeten ringförmigen Befestigungselement ist beispielsweise der eine Stahlring mit seiner außenliegenden Stirnseite an die Stirnwand beziehungsweise den Deckel geschraubt oder mit diesem verschweißt und der zweite Stahlring ist mit seiner außenliegenden Stirnseite mit der Verbindungseinheit beziehungsweise dem Gehäuse verschraubt bzw. mit diesem verschweißt.

Gemäß einer Ausführungsform der Erfindung ist vorgesehen, dass die Verbindungseinheit beziehungsweise das Gehäuse des Dichtungsmoduls das mindestens eine Dichtelement zumindest teilweise umschließt und / oder dass das mindestens eine Dichtelement stirnseitig an der Verbindungseinheit beziehungsweise dem Gehäuse befestigt ist.

Wird eine Stopfbuchsdichtung als Dichtelement verwendet oder besteht dieses aus Wellendichtringen, so ist dieses Dichtelement vorzugsweise in einem zwischen der Verbindungseinheit beziehungsweise dem Gehäuse und der Wellendichtungshülse ausgebildeten Bereich beziehungsweise Freiraum angeordnet, insbesondere ist das Dichtelement innerhalb der Verbindungseinheit auf der Wellendichtungshülse angeordnet.

Wird eine Gleitringdichtung als Dichtelement verwendet, so ist diese stirnseitig an der Verbindungseinheit befestigt und auf der Wellendichtungshülse angeordnet. Gemäß einer Ausführungsform der Erfindung ist vorgesehen, eine geteilte Gleitringdichtung zu verwenden, da diese insbesondere bei großen Mühlen einfacher zu montieren sind.

Gemäß einer Ausführungsform der Erfindung sind der Verbindungseinheit beziehungsweise dem Gehäuse des Dichtungsmoduls zwei Dichtelemente zugeordnet. Das erste Dichtelement ist im Innenraum des Mahlbehälters der Rührwerkskugelmühle angeordnet und das zweite Dichtelement ist außerhalb des Innenraums des Mahlbehälters der Rührwerkskugelmühle angeordnet. Zwischen den beiden Dichtelementen ist eine Zwischenhülse angeordnet. Die Zwischenhülse umgreift die Wellendichtungshülse zumindest bereichsweise allumfänglich. Weiterhin umgreift die Verbindungseinheit beziehungsweise das Gehäuse die Zwischenhülse zumindest bereichsweise allumfänglich. Die Länge der Zwischenhülse in axialer Richtung definiert somit den Abstand zwischen den zwei Dichtelementen.

Gemäß einer Ausführungsform der Erfindung ist eine erste Gleitringdichtung im Innenraum des Mahlbehälters der Rührwerkskugelmühle angeordnet und eine zweite Gleitringdichtung außerhalb des Innenraums des Mahlbehälters der Rührwerkskugelmühle. Beide Gleitrichtdichtungen können jeweils stirnseitig an der Verbindungseinheit beziehungsweise dem Gehäuse des Dichtungsmoduls befestigt sein. Insbesondere handelt es sich bei der dynamischen Dichtung um eine so genannte Gleitringdichtung umfassend zwei aufeinander gleitende Bauteile, insbesondere einen Gleitring und einen Gegenring. Der Gleitring ist mithilfe von Verdrehsicherungsstiften auf der rotierenden Antriebswelle des Rührwerks befestigt. Der Gegenring sitzt starr im stationären Gehäuse. Die Flächen zwischen diesen beiden Teilen sind - abhängig von der Art der Gleitringdichtung - zumeist plan und bestehen in der Regel aus Kohlenstoff-Graphitwerkstoffen, Metall, Keramik, Kunststoff oder kunstharzgebundenem Kohlenstoff. Die einander gegenüberliegenden axialen oder radialen Dichtungsflächen des Gleitrings und des Gegenrings rotieren relativ zueinander und bilden einen primären Dichtspalt. Zwischen den Dichtflächen wird durch das umgebende Medium ein Schmierfilm erzeugt. Die Abdichtung der Gleitringdichtungsteile gegenüber der Antriebswelle beziehungsweise gegenüber der Stirnwand erfolgt in der Regel mit Nebendichtungen in Form von zusätzlichen O-Ringen oder Manschetten.

Ein wichtiger Aspekt der vorliegenden Erfindung betrifft die Möglichkeit des Einbaus einer Kombination aus verschiedenen Dichtelementen an einem flexibel befestigten Gehäuse. Mögliche Einbauvarianten können beispielsweise sein: nur eine Stopfbuchsdichtung; nur eine Gleitringdichtung insbesondere atmosphärenseitig, das heißt außerhalb des Innenraums des Mahlbehälters angeordnet; zwei Gleitringdichtungen, wobei eine Gleitringdichtung atmosphärenseitig und die andere Gleitringdichtung mahlraumseitig an der Verbindungseinheit beziehungsweise dem Gehäuse befestigt ist; Wellendichtringe mit reduzierter Leckage oder eine Kombination von Gleitringdichtung und Wellendichtringen. Wird im Bereich des flexiblen Gehäuses eine Stopfbuchsdichtung oder Wellendichtringe verbaut, so liegen die Dichtungspackung der Stopfbuchsdichtung oder die Wellendichtringe innerhalb des flexibel befestigten Gehäuses auf der Wellendichtungshülse auf. Wird im Bereich des flexibel befestigten Gehäuses eine zweite Gleitringdichtung verwendet, so liegt diese etwas hinter dem Bereich, in welchem eine Dichtungspackung einer Stopfbuchsdichtung angeordnet wäre. In dem Bereich der Dichtungspackung ist stattdessen ein Platzhalter eingesetzt. Wird im Bereich des flexiblen Gehäuses eine oder zwei Gleitringdichtungen verbaut, so sind beide stets an dem flexiblen Gehäuse befestigt.

Die flexibel befestigte Verbindungseinheit beziehungsweise das flexibel befestigte Gehäuse ist so ausgeführt, dass bei gleichem Einbauraum alle Dichtelemente im und am gleichen Gehäuse aufgenommen und befestigt werden können. In einer bevorzugten Ausführungsform sind alle Dichtelemente von ihren Abmessungen her so gewählt, dass sie in oder an der gleichen Verbindungseinheit beziehungsweise im oder am gleichen Gehäuse alternativ zueinander eingebaut werden können. Wahlweise ist aber auch ein erstes Dichtelement in der flexiblen Verbindungseinheit beziehungsweise in dem flexiblen Gehäuse innerhalb des Mahlbehälters angeordnet, insbesondere in einem zwischen dem Gehäuse und der Wellendichtungshülse gebildeten Bereich, während das zweite Dichtelement auf der Atmosphärenseite von außen mit dem flexiblen Gehäuse verbunden ist. Durch die Verwendung einer Verbindungseinheit beziehungsweise eines Gehäuses mit flexiblen Befestigungselementen ist es möglich, Gleitringdichtungen dauerhaft dichtend im Bereich der Antriebswelle der Rührwerkskugelmühle zu verbauen.

Gemäß einer Ausführungsform der Erfindung ist zwischen der Zwischenhülse und der Wellendichtungshülse ein Freiraum ausgebildet, über den Spülflüssigkeit in die Rührwerkskugelmühle eingeführt werden kann. Insbesondere wird Spülflüssigkeit durch den Spülspalt in den Mahlraum gespült, um zu verhindern, dass Mahlkörper und / oder Mahlgut in den Dichtungsbereich gelangen und sich dort festsetzen können. Das Spülen verhindert somit Verschmutzungen, die beispielsweise eine Blockierung der Rührwerkswelle bewirken könnten.

Gemäß einer Ausführungsform der Erfindung ist ein Abdeckelement im Innenraum des Mahlbehälters vorgesehen, dass das im Inneren des Mahlbehälters angeordnete Dichtelement umschließt und somit Schutz gegenüber dem Mahlgut und / oder den Mahlkörpern im Inneren des Mahlraums bietet. Insbesondere stellt das Abdeckelement eine räumliche Abtrennung zwischen dem Mahlraum und dem innenliegenden Dichtelement her.

Durch die Verwendung einer flexibel befestigten Verbindungseinheit beziehungsweise eines flexibel befestigten Gehäuses ist es möglich erhöhte Fertigungstoleranzen, Wellendurchbiegungen und Wellenauslenkungen, sowie Axialbewegungen der Rührwerkswelle im Bereich von bis zu 2 mm auszugleichen. Weiterhin bewirkt die Befestigung der Dichtelemente an flexiblen Elementen, dass Vibrationen der Mühle besser aufgefangen und abgefangen werden, wodurch sich die Lebensdauer der Dichtelemente erhöht.

Ein weiterer Vorteil der Erfindung besteht daran, dass an dem flexibel befestigten Gehäuse einfach, schnell und kostengünstig verschiedene Varianten an Dichtelementen befestigt werden können. Auch ein Austausch der Dichtelemente, beispielsweise der Austausch defekter, undichter Dichtelemente, oder wenn aus technischen Gründen eine andere Dichtelement- Variante gewünscht wird, ist bei Montage der Dichtelemente an der flexibel befestigten Verbindungseinheit vereinfacht.

Auch kann vorgesehen sein, dass Rührwerkskugelmühlen erst bei einem Austausch der Dichtelementen mit einem flexibel befestigten Gehäuse zur Befestigung der Dichtelemente ausgestattet werden, um die technischen Vorteile der elastischen Befestigung zu nutzen. Diese derart nachgerüsteten alten Rührwerkskugelmühlen sollen ebenfalls von dem Schutzbereich der Ansprüche umfasst sein.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine Rührwerkskugelmühle mit einer ersten Ausführungsform einer Wellendurchführung.
Figur 2 zeigt eine Rührwerkskugelmühle mit einer zweiten Ausführungsform einer Wellendurchführung.
Figur 3 zeigt eine detaillierte Ansicht der ersten Ausführungsform der Wellendurchführung gemäß Figur 1.
Figur 4 zeigt eine detaillierte Ansicht der zweiten Ausführungsform der Wellendurchführung gemäß Figur 2.
Figur 5 zeigt eine Möglichkeit einer Befestigung eines flexiblen Befestigungselements innerhalb der Rührwerkskugelmühle.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

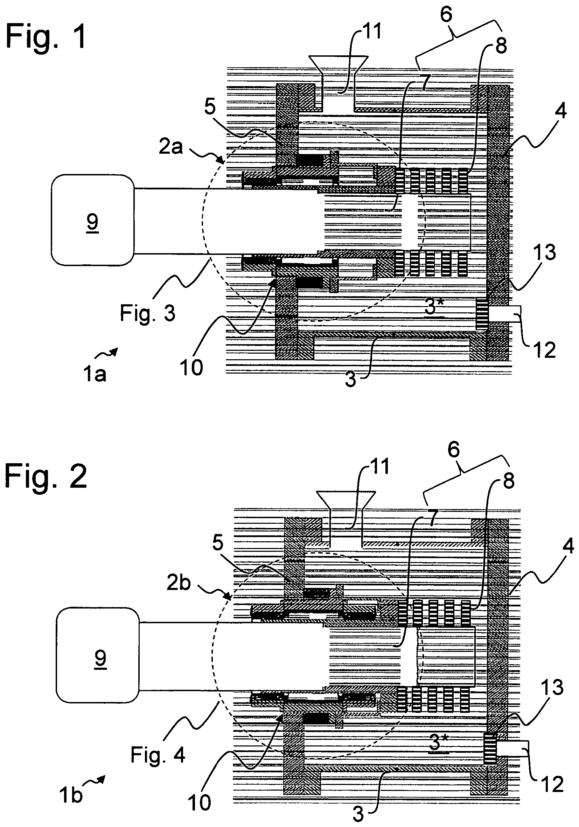

Figur 1 zeigt eine Rührwerkskugelmühle 1a mit einer ersten Ausführungsform einer Wellendurchführung 2a und Figur 2 zeigt eine Rührwerkskugelmühle 1b mit einer zweiten Ausführungsform einer Wellendurchführung 2b. Die Rührwerkskugelmühle 1a, 1b umfasst einen zylindrischen Mahlbehälter 3 mit einer Bodenabdeckung 4 und einem Deckel 5. Die Rührwerkskugelmühle 1a, 1b umfasst weiterhin ein Rührwerk 6, mit einer Rührwerkswelle 7 und daran angeordneten Rührwerkzeugen 8.

Die Bewegung der Rührwerkswelle 7 wird durch einen außenhalb des Mahlraums 3* angeordneten Antrieb 9 bewirkt. Durch die Bewegung der Rührwerkswelle 7 und der daraus resultierenden Bewegung der Rührwerkzeuge 8 wird im Inneren des Mahlraums 3* des Mahlbehälters 3 eine intensive Bewegung der Mahlkörper zusammen mit dem Mahlgut erzeugt. Die Mahlkörper bestehen beispielsweise aus Stahl oder verschleißfesten keramischen Materialien.

Das Mahlgut wird über einen Einlass 11 eingefüllt und kontinuierlich durch den Mahlraum 3* gepumpt. Dabei werden die Feststoffe durch Prall- und Scherkräfte zwischen den Mahlkörpern zerkleinert beziehungsweise dispergiert. Am Auslass 12 der Rührwerkskugelmühle 1a, 1b erfolgt die Trennung von Mahlgut und Mahlkörpern mittels einer geeigneten Trenneinrichtung 13.

Die Rührwerkswelle 7 durchgreift den Deckel 5 im Bereich einer zentralen Öffnung 10. In diesem Bereich ist eine Wellenabdichtung 2a, 2b angeordnet, zum Abdichten der rotierenden Rührwerkswelle 7 gegenüber dem Deckel 5. Die Wellenabdichtung 2a, 2b verhindert insbesondere ein Austreten von Mahlgut und / oder Mahlkörpern im Bereich der zentralen Öffnung 10 des Deckels 5.

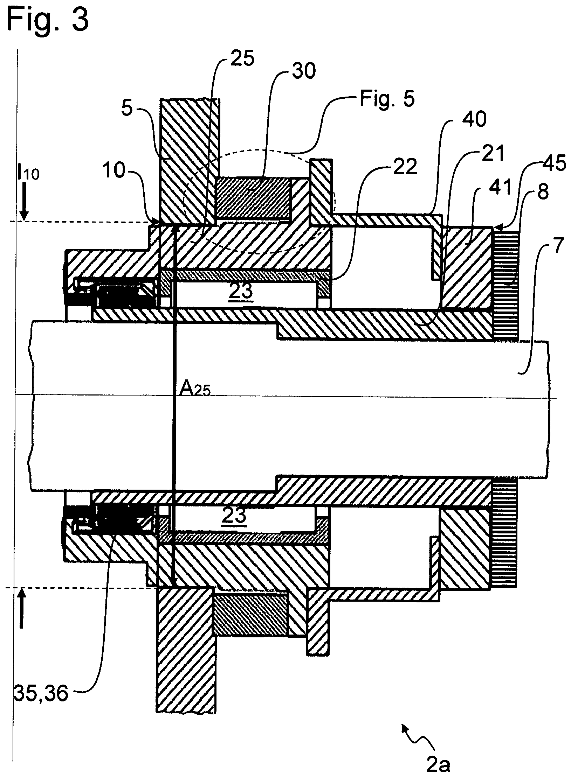

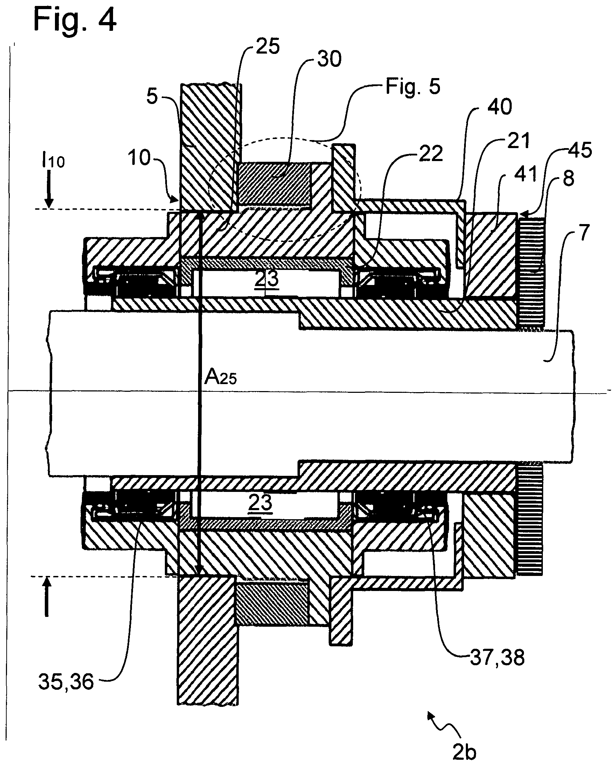

Figur 3 zeigt eine detaillierte Ansicht der ersten Ausführungsform der Wellendurchführung 2a gemäß Figur 1 und Figur 4 zeigt eine detaillierte Ansicht der zweiten Ausführungsform der Wellendurchführung 2b gemäß Figur 2. Die Rührwerkswelle 7 ist im Bereich der zentralen Öffnung 10 des Deckels 5 von einer Wellendichtungshülse 21 umschlossen und durch die Öffnung 10 geführt. Auf der Wellendichtungshülse 21 ist bereichsweise, insbesondere im Bereich der Öffnung 10 eine Zwischenhülse 22 angeordnet. Die Zwischenhülse 22 umschließend ist weiterhin ein Gehäuse 25 vorgesehen. Das Gehäuse 25 ist in Form eines Ringes ausgebildet, wobei der Ring einen Außendurchmesser A₂₅ aufweist, der nahezu einem Innendurchmesser I₁₀ der zentralen Öffnung 10 des Deckels 5 entspricht. Insbesondere ist das Gehäuse 25 bereichsweise mit geringem Spiel in der zentralen Öffnung 10 des Deckels 5 geführt.

Das Gehäuse 25 ist über ein flexibles Befestigungselement 30 am Deckel 5 angeordnet. Insbesondere erlaubt das flexible Befestigungselement 30 eine zumindest geringfügige axiale und radiale Beweglichkeit des Gehäuses 25 und somit eine zumindest geringfügige axiale und radiale Beweglichkeit der Rührwerkswelle 7.

Gemäß dem ersten Ausführungsbeispiel der Figuren 1 und 3 ist jeweils atmosphärenseitig, das heißt außerhalb des Mahlbehälters 3, ein erstes Dichtelement 35, insbesondere eine erste Gleitringrichtung 36, angeordnet. Die Gleitringdichtung 36 ist insbesondere nur am Gehäuse 25 befestigt und liegt zumindest bereichsweise derart auf der Wellendichtungshülse 21 auf, dass sie die zentrale Öffnung 10 des Deckels 5 gegenüber der Wellendichtungshülse 21 und somit gegenüber der Rührwerkswelle 7 abdichtet.

Gemäß dem zweiten Ausführungsbeispiel der Figuren 2 und 4 ist jeweils atmosphärenseitig, das heißt außerhalb des Mahlbehälters 3, ein erstes Dichtelement 35, insbesondere eine erste Gleitringrichtung 36, angeordnet. Weiterhin ist mahlraumseitig, das heißt innerhalb des Mahlbehälters 3, ein zweites Dichtelement 37, insbesondere eine zweite Gleitringrichtung 38, angeordnet. Die Gleitringdichtungen 36, 38 ist insbesondere jeweils nur am Gehäuse 25 befestigt und liegen zumindest bereichsweise derart auf der Wellendichtungshülse 21 auf, dass sie die zentrale Öffnung 10 des Deckels 5 gegenüber der Wellendichtungshülse 21 und somit gegenüber der Rührwerkswelle 7 abdichten.

Die innen liegend angeordnete Gleitringdichtung 38 ist gegenüber dem Innenraum des Mahlbehälters 3 durch weitere Abdeck- und / oder Distanzelemente 40, 41 geschützt. Insbesondere ist zwischen dem Distanzelement 41 und dem Rührwerkzeug 8 ein Spülspalt 45 ausgebildet. Vorzugsweise wird bei Ausführung der Rührwerkskugelmühle 1a gemäß Figur 1 über den zwischen der Zwischenhülse 22 und der Wellendichtungshülse 21 ausgebildeten Freiraum 23 eine Spülflüssigkeit in den Mahlraum 3* der Rührwerkskugelmühle gespült, um zu verhindern, dass Mahlkörper und / oder Mahlgut in den Bereich der abgedichteten Bereich der Wellendurchführung 2a gelangen und sich dort festsetzen können. Dagegen wird bei der Ausführung der Rührwerkskugelmühle 1b gemäß Figur 2 über den Bereich zwischen dem zweiten Dichtelement 37, 38 und dem Abdeckelement 40 eine Spülflüssigkeit in den Mahlraum 3* der Rührwerkskugelmühle gespült, um zu verhindern, dass Mahlkörper und / oder Mahlgut in den Bereich der abgedichteten Bereich der Wellendurchführung 2b gelangen und sich dort festsetzen können.

Das Gehäuse 25, das flexible Befestigungselement 30, das erste Dichtelement 35 und / oder das zweite Dichtelement 37 bilden zusammen ein Dichtungsmodul 27, das die Rührwerkswelle 7 und die Wellendichtungshülse 21 im Bereich der zentralen Öffnung 10 des Deckels 5 umschließt und somit die zentrale Öffnung 10 gegenüber der Rührwerkswelle 7 abdichtet. Das flexible Befestigungselement 30 ist zwischen dem Deckel 5 und dem Gehäuse 25 angeordnet und zum einen am Deckel 5 und zum anderen am Gehäuse 25 befestigt.

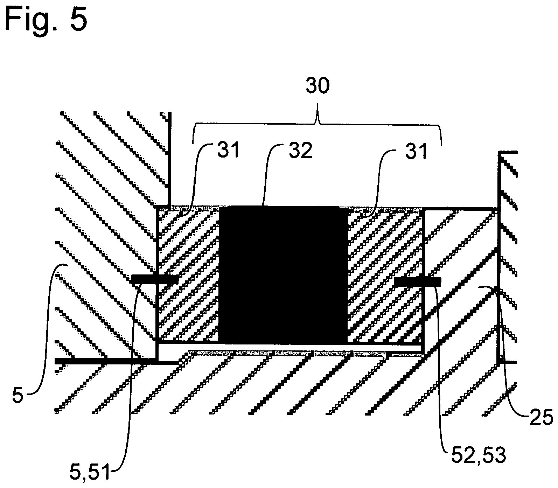

Figur 5 zeigt die Befestigung eines flexiblen Befestigungselements 30 innerhalb der Rührwerkskugelmühle 1a, 1b (vergleiche Figuren 1 bis 4). Das flexible Befestigungselement 30 ist dreischichtig aufgebaut und besteht aus zwei äußeren Stahlringen 31 und einem dazwischen angeordneten Gummiring 32. Das flexible Befestigungselement 30 ist über erste Befestigungsmittel 50, beispielsweise Schrauben 51, am Deckel 5 montiert und über zweite Befestigungsmittel 52, beispielsweise Schrauben 53, am Gehäuse 25 befestigt. Insbesondere erfolgt die Befestigung jeweils über die äußeren Stahlringe 31 des Befestigungselementes 30, so dass die Flexibilität des mittleren Gummirings 32 nicht beeinflusst wird. Dadurch bildet das flexible Befestigungselement 30 eine flexible Verankerung des Dichtungsmoduls 27 am Deckel 5.

Durch die Verwendung eines flexibel befestigten Gehäuses 25 ist es möglich erhöhte Fertigungstoleranzen, Wellendurchbiegungen und Wellenauslenkungen, sowie Axialbewegungen der Rührwerkswelle 7 im Bereich von bis zu 2 mm gegenüber der zentralen Öffnung 10 auszugleichen. Weiterhin bewirkt die Befestigung der Dichtelemente 35, 37 an flexiblen Elementen 30, dass Vibrationen der Rührwerkskugelmühle 1a, 1b besser aufgefangen und abgefangen werden, wodurch sich die Lebensdauer der Dichtelemente 35, 37 erhöht.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Rührwerkskugelmühle
- 2: Wellendurchführung
- 3: Mahlbehälter
- 3*: Mahlraum
- 4: Bodenabdeckung
- 5: Deckel
- 6: Rührwerk
- 7: Rührwerkswelle
- 8: Rührwerkzeug
- 9: Antrieb
- 10: zentrale Öffnung
- 11: Einlass
- 12: Auslass
- 21: Wellendichtungshülse
- 22: Zwischenhülse
- 23: Freiraum
- 25: Gehäuse / Verbindungseinheit
- 27: Dichtungsmodul
- 30: flexibles Befestigungselement
- 31: äußerer Stahlring
- 32: mittlerer Gummiring
- 35: erstes Dichtelement
- 36: Gleitringrichtung
- 37: zweites Dichtelement
- 38: Gleitringrichtung
- 40: Abdeckelement
- 41: Distanzelement
- 45: Spülspalt
- 50: erste Befestigungsmittel
- 51: Schraube
- 52: zweite Befestigungsmittel
- 53: Schraube

## Patentansprüche

1. Rührwerkskugelmühle (1) umfassend einen zylindrischen Mahlbehälter (3), der durch einander gegenüberliegende Stirnwände (4,5) verschlossen ist, mit einer Antriebswelle (7) eines Rührwerks (6), die innerhalb einer Wellendurchführung (2) durch eine Stirnwand der Rührwerkskugelmühle (1) geführt ist, wobei die Antriebswelle (7) des Rührwerks (6) im Bereich einer der Stirnwände (5) von einer Wellendichtungshülse (21) umschlossen und über eine zentrale Öffnung (10) durch die Stirnwand (5) geführt ist, mit einem die Antriebswelle (7) und die Wellendichtungshülse (21) im Bereich der zentralen Öffnung (10) umschließenden Dichtungsmodul, das Dichtungsmodul umfassend wenigstens ein Dichtelement (35, 37) zur Abdichtung der zentralen Öffnung (10) der Stirnwand (5) gegenüber der Antriebswelle (7), wobei das Dichtungsmodul (27) eine Verbindungseinheit (25) umfasst, der das mindestens eine Dichtelement (35, 37) zugeordnet ist und wobei das Dichtungsmodul (27) über die Verbindungseinheit (25) an der Stirnwand (25) flexibel verankert ist, wobei die Verankerung ein flexibles Befestigungselement (30) zwischen der Stirnwand (5) und der Verbindungseinheit (25) umfasst, wobei das flexible Befestigungselement (30) als Ringelement ausgebildet ist **dadurch gekennzeichnet, dass** das flexible Befestigungselement (30) aus mindestens zwei in axialer Richtung nebeneinander angeordneten Schichten (31, 32) aufgebaut ist, wobei mindestens eine Schicht (32) kompressibel und / oder elastisch ist.

2. Rührwerkskugelmühle (1) nach Anspruch 1, wobei die Verbindungseinheit (25) die Wellendichtungshülse (21) zumindest bereichsweise allumfänglich umgreift.

3. Rührwerkskugelmühle (1) nach Anspruch 1 oder 2, wobei das flexible Befestigungselement (30) die Verbindungseinheit (25) zumindest bereichsweise allumfänglich umgreift.

4. Rührwerkskugelmühle (1) nach einem der voranstehenden Ansprüche, wobei das flexible Befestigungselement (30) aus drei in axialer Richtung aneinander gesetzten Schichten (31, 32) aufgebaut ist, wobei die mittlere Schicht (32) kompressibel und / oder elastisch ist.

5. Rührwerkskugelmühle (1) nach Anspruch 4, wobei das Ringelement mit einer Stirnseite an der Stirnwand (5) befestigt ist und wobei das Ringelement mit der gegenüberliegenden Stirnseite an der Verbindungseinheit (25) befestigt ist.

6. Rührwerkskugelmühle (1) nach einem der voranstehenden Ansprüche, wobei die Verbindungseinheit (25) das mindestens eine Dichtelement (35, 37) zumindest teilweise umschließt und / oder wobei das mindestens eine Dichtelement (35, 37) stirnseitig an der Verbindungseinheit befestigt ist.

7. Rührwerkskugelmühle (1) nach Anspruch 6, wobei das mindestens eine Dichtelement (35, 37) eine Stopfbuchsdichtung ist oder aus Wellendichtringen besteht und wobei die Dichtungspackung der Stopfbuchsdichtung und / oder die Wellendichtringe in einem zwischen der Verbindungseinheit (25) und der Wellendichtungshülse (21) ausgebildeten Freiraum angeordnet ist.

8. Rührwerkskugelmühle (1) nach Anspruch 6, wobei das mindestens eine Dichtelement (35, 37) eine Gleitringdichtung ist, die stirnseitig an der Verbindungseinheit (25) befestigt, auf der Wellendichtungshülse (21) angeordnet ist.

9. Rührwerkskugelmühle (1) nach Anspruch 8, wobei die Gleitringdichtung eine geteilte Gleitringdichtung ist.

10. Rührwerkskugelmühle (1) nach einem der Ansprüche 2 bis 9, wobei der Verbindungseinheit (25) zwei Dichtelemente (35, 37) zugeordnet sind, wobei ein erstes Dichtelement (35) außerhalb des Innenraums (3*) des Mahlbehälters (3) der Rührwerkskugelmühle (1) angeordnet ist und wobei ein zweites Dichtelement (37) im Innenraum (3*) des Mahlbehälters (3) der Rührwerkskugelmühle (1) angeordnet ist, wobei zwischen den beiden Dichtelementen (35, 37) eine Zwischenhülse (22) angeordnet ist, wobei die Zwischenhülse (22) die Wellendichtungshülse (21) zumindest bereichsweise allumfänglich umgreift und wobei die Verbindungseinheit (25) die Zwischenhülse (22) zumindest bereichsweise allumfänglich umgreift.

11. Rührwerkskugelmühle (1) nach Anspruch 10, wobei beide Dichtelemente (35, 37) jeweils als Gleitringdichtung ausgeführt sind

12. Rührwerkskugelmühle (1) nach einem der Ansprüche 10 oder 11, wobei zwischen der Zwischenhülse (22) und der Wellendichtungshülse (21) ein Freiraum (23) ausgebildet ist, über den Spülflüssigkeit in die Rührwerkskugelmühle (1) einführbar ist.

13. Rührwerkskugelmühle (1) nach einem der Ansprüche 1 bis 12, wobei ein im Inneren des Mahlbehälters (3) angeordnetes Dichtelement (37) von einem Abdeckelement (40) umschlossen und somit gegenüber dem Innenraum (3*) des Mahlbehälters räumlich getrennt ist.

## Claims

1. An agitating ball mill (1) comprising a cylindrical grinding container (3), which is closed by means of end walls (4, 5) located opposite one another, comprising a drive shaft (7) of an agitator (6), which is guided through an end wall of the agitating ball mill (1) within a shaft feed-through (2), wherein the drive shaft (7) of the agitator (6) is enclosed by a shaft seal sleeve (21) in the region of one of the end walls (5) and is guided through the end wall (5) via a central opening (10), comprising a sealing module enclosing the drive shaft (7) and the shaft seal sleeve (21) in the region of the central opening (10), the sealing module comprising at least one sealing element (35, 37) for sealing the central opening (10) of the end wall (5) with respect to the drive shaft (7), wherein the sealing module (27) comprises a connecting unit (25), to which the at least one sealing element (35, 37) is assigned, and wherein the sealing module (27) is flexibly anchored to the end wall (25) via the connecting unit (25), wherein the anchoring comprises a flexible fastening element (30) between the end wall (5) and the connecting unit (25), wherein the flexible fastening element (30) is formed as ring element, **characterized in that** the flexible fastening element (30) is constructed from at least two layers (31, 32) arranged next to one another in the axial direction, wherein at least one layer (32) is compressible and/or elastic.

2. The agitating ball mill (1) according to claim 1, wherein the connecting unit (25) encompasses the shaft seal sleeve (21) around the entire circumference at least in some regions.

3. The agitating ball mill (1) according to claim 1 or 2, wherein the flexible fastening element (30) encompasses the connecting unit (25) around the entire circumference at least in some regions.

4. The agitating ball mill (1) according to one of the preceding claims, wherein the flexible fastening element (30) is constructed from three layers (31, 32) placed against one another in the axial direction, wherein the middle layer (32) is compressible and/or elastic.

5. The agitating ball mill (1) according to claim 4, wherein the ring element is fastened with an end side to the end wall (5), and wherein the ring element is fastened with the opposite end side to the connecting unit (25).

6. The agitating ball mill (1) according to one of the preceding claims, wherein the connecting unit (25) at least partially encloses the at least one sealing element (35, 37) and/or wherein the at least one sealing element (35, 37) is fastened to the connecting unit on the end side.

7. The agitating ball mill (1) according to claim 6, wherein the at least one sealing element (35, 37) is a stuffing box seal or consists of shaft sealing rings, and wherein the seal packing of the stuffing box seal and/or the shaft sealing rings is arranged in a clearance formed between the connecting unit (25) and the shaft seal sleeve (21).

8. The agitating ball mill (1) according to claim 6, wherein the at least one sealing element (35, 37) is a mechanical seal, which is arranged on the shaft seal sleeve (21), fastened to the connecting unit (25) on the end side.

9. The agitating ball mill (1) according to claim 8, wherein the mechanical seal is a divided mechanical seal.

10. The agitating ball mill (1) according to one of claims 2 to 9, wherein two sealing elements (35, 37) are assigned to the connecting unit (25), wherein a first sealing element (35) is arranged outside of the internal space (3*) of the grinding container (3) of the agitating ball mill (1), and wherein a second sealing element (37) is arranged in the internal space (3*) of the grinding container (3) of the agitating ball mill (1), wherein an intermediate sleeve (22) is arranged between the two sealing elements (35, 37), wherein the intermediate sleeve (22) encompasses the shaft seal sleeve (21) around the entire circumference at least in some regions, and wherein the connecting unit (25) encompasses the intermediate sleeve (22) around the entire circumference at least in some regions.

11. The agitating ball mill (1) according to claim 10, wherein both sealing elements (35, 37) are in each case embodied as mechanical seal.

12. The agitating ball mill (1) according to one of claims 10 or 11, wherein a clearance (23), via which flushing liquid can be introduced into the agitating ball mill (1), is formed between the intermediate sleeve (22) and the shaft seal sleeve (21).

13. The agitating ball mill (1) according to one of claims 1 to 12, wherein a sealing element (37) arranged in the interior of the grinding container (3) is enclosed by a cover element (40) and is thus spatially separated with respect to the interior space (3*) of the grinding container.

## Revendications

1. Broyeur-agitateur à boulets (1), comprenant un réservoir de broyage (3) cylindrique, qui est fermé par des parois frontales (4, 5) mutuellement opposées, pourvu d'un arbre d'entraînement (7) d'un agitateur (6), qui à l'intérieur d'un passage (2) d'arbre est guidé à travers une paroi frontale du broyeur-agitateur à boulets (1), l'arbre d'entraînement (7) de l'agitateur (6) étant entouré dans la zone de l'une des parois frontales (5) par une douille d'étanchéité (21) de l'arbre et étant guidé à travers un orifice (10) central à travers la paroi frontale (5), pourvu d'un module d'étanchéité entourant l'arbre d'entraînement (7) et la douille d'étanchéité (21) de l'arbre dans la zone de l'orifice (10) central, le module d'étanchéité comprenant au moins un élément d'étanchéité (35, 37), destiné à assurer l'étanchéité de l'orifice (10) central de la paroi frontale (5) par rapport à l'arbre d'entraînement (7), le module d'étanchéité (27) comprenant une unité d'assemblage (25), à laquelle est associé l'au moins un élément d'étanchéité (35, 37) et le module d'étanchéité (27) étant ancré de manière souple par l'intermédiaire de l'unité d'assemblage (25) sur la paroi frontale (25), l'ancrage comprenant un élément de fixation (30) souple entre la paroi frontale (5) et l'unité d'assemblage (25), l'élément de fixation (30) souple étant conçu sous la forme d'un élément annulaire, **caractérisé en ce que** l'élément de fixation (30) souple est constitué d'au moins deux couches (31, 32), placées côte à côte dans la direction axiale, au moins une couche (32) étant compressible et / ou élastique.

2. Broyeur-agitateur à boulets (1) selon la revendication 1, l'unité d'assemblage (25) entourant sur toute la périphérie la douille d'étanchéité (21) de l'arbre au moins par endroits.

3. Broyeur-agitateur à boulets (1) selon la revendication 1 ou 2, l'élément de fixation (30) souple entourant sur toute la périphérie l'unité d'assemblage (25) au moins par endroits.

4. Broyeur-agitateur à boulets (1) selon l'une quelconque des revendications précédentes, l'élément de fixation (30) souple étant constitué de trois couches (31, 32) juxtaposées dans la direction axiale, la couche (32) centrale étant compressible et / ou élastique.

5. Broyeur-agitateur à boulets (1) selon la revendication 4, l'élément annulaire étant fixé par une face frontale sur la paroi frontale (5) et l'élément annulaire étant fixé par la face frontale opposée sur l'unité d'assemblage (25).

6. Broyeur-agitateur à boulets (1) selon l'une quelconque des revendications précédentes, l'unité d'assemblage (25) entourant au moins partiellement l'au moins un élément d'étanchéité (35, 37) et / ou l'au moins un élément d'étanchéité (35, 37) étant fixé face frontale sur l'unité d'assemblage.

7. Broyeur-agitateur à boulets (1) selon la revendication 6, l'au moins un élément d'étanchéité (35, 37) étant un joint presse-étoupe ou étant constitué de joints d'arbre annulaires et la garniture d'étanchéité du joint presse-étoupe et / ou les joints d'arbre annulaires étant placé(s) dans un espace libre conçu entre l'unité d'assemblage (25) et la douille d'étanchéité (21) de l'arbre.

8. Broyeur-agitateur à boulets (1) selon la revendication 6, l'au moins un élément d'étanchéité (35, 37) étant une garniture mécanique, qui en étant fixée face frontale sur l'unité d'assemblage (25) est placée sur la douille d'étanchéité (21) de l'arbre.

9. Broyeur-agitateur à boulets (1) selon la revendication 8, la garniture mécanique étant une garniture mécanique divisée.

10. Broyeur-agitateur à boulets (1) selon l'une quelconque des revendications 2 à 9, à l'unité d'assemblage (25) étant associés deux éléments d'étanchéité (35, 37), un premier élément d'étanchéité (35) étant placé à l'extérieur de l'espace intérieur (3*) du réservoir de broyage (3) du broyeur-agitateur à boulets (1) et un deuxième élément d'étanchéité (37) étant placé à l'intérieur de l'espace intérieur (3*) du réservoir de broyage (3) du broyeur-agitateur à boulets (1), entre les deux éléments d'étanchéité (35, 37) étant placée une douille intermédiaire (22), la douille intermédiaire (22) entourant sur toute la périphérie la douille d'étanchéité (21) de l'arbre au moins par endroits et l'unité d'assemblage (25) entourant sur toute la périphérie la douille intermédiaire (22) au moins par endroits.

11. Broyeur-agitateur à boulets (1) selon la revendication 10, les deux éléments d'étanchéité (35, 37) étant réalisés chacun sous la forme d'une garniture mécanique.

12. Broyeur-agitateur à boulets (1) selon l'une quelconque des revendications 10 ou 11, entre la douille intermédiaire (22) et la douille d'étanchéité (21) de l'arbre étant conçu un espace libre (23), par l'intermédiaire duquel du liquide de rinçage peut être introduit dans le broyeur-agitateur à boulets (1).

13. Broyeur-agitateur à boulets (1) selon l'une quelconque des revendications 1 à 12, un élément d'étanchéité (37) placé à l'intérieur du réservoir de broyage (3) étant entouré par un élément de recouvrement (40) et étant ainsi séparé physiquement par rapport à l'espace intérieur (3*) du réservoir de broyage.
